# EUROPÄISCHE PATENTSCHRIFT

(11) **EP 3 245 976 B1**
(45) Veröffentlichungstag und Bekanntmachung des Hinweises auf die Patenterteilung: **03.07.2019**
(21) Anmeldenummer: 17171849.7
(22) Anmeldetag: 19.05.2017
(51) Int. Cl.: A61C 13/00, A61C 13/01, A61C 13/36, A61C 13/10

(54) **VERFAHREN ZUR HERSTELLUNG EINER ZAHNPROTHESE**
METHOD FOR MANUFACTURING A DENTAL PROSTHESIS
PROCÉDÉ DE FABRICATION D'UNE PROTHÈSE DENTAIRE

(30) Priorität: 20.05.2016 DE 102016109314
(43) Veröffentlichungstag der Anmeldung: 22.11.2017
(73) Patentinhaber: Gebdi Dental-Products GmbH, 78234 Engen (DE)
(72) Erfinder: Biskupski, Thomas, 78234 Engen (DE)
(74) Vertreter: Patentanwälte und Rechtsanwalt Weiß, Arat & Partner mbB

(56) Entgegenhaltungen:
- WO-A1-2013/124452
- DE-A1-102012 007 706
- US-A1- 2012 276 502

## Beschreibung

### Technisches Gebiet

Die Erfindung betrifft ein Verfahren zur Herstellung einer Zahnprothese.

### Stand der Technik

Herkömmlich wurden bei der Aufstellung vorkonfektionierter Standard-Prothesenzähne, diese an die jeweilige Mundsituation des Patienten vom Zahntechniker angepasst und entsprechend geschliffen. Es gibt heute bereits weitere Verfahren, wie beispielsweise die aus der DE 10 2015 100 080 B3 oder der DE 40 25 728 A1 bekannten Verfahren, bei denen die Totalprothese digital aufgestellt und über CAD-CAM-Verfahren produziert wird.

In diesem Zusammenhang wird auf die DE 10 2012 007 706 A1 hingewiesen. Dort ist ein Verfahren zum Herstellen eines künstlichen Gebisses offenbart, wobei das künstliche Gebiss ein Basiselement aufweist, welches wenigstens zwei Zahnrohlinge hält, die währenddessen bearbeitet werden.

Weiter wird auf die US 2012/0276502 A1 hingewiesen. Dort ist ein Verfahren zur Herstellung einer Zahnprothese offenbart, bei der die Ist-Situation des Kiefers erfasst wird, um dann anhand der Ist-Situation angepasste Prothesenzähne herzustellen.

Ausserdem wird auf die WO 2013/124452 A1 hingewiesen. Hier werden die 3D-Daten eines Ist-Zustandes eines Kiefers erfasst, um anschliessend eine angepasste Zahnprothese herzustellen.

Dabei ist es jedoch immer noch notwendig die Standard - Prothesenzähne an die individuellen Gegebenheiten und die Situation des Patienten sowie an die Prothesenbasis anzupassen. Dazu werden die Standard - Prothesenzähne in unterschiedliche Halterungen eigespannt oder eingebettet, wie beispielsweise in der DE 10 2013 112 747 A1 Verfahren und Vorrichtung zur Halterung vorkonfektionierter Prothesenzähne, oder in der DE 10 2011 101 678 A1 Prothesenzahnträger vorgeschlagen wird. Wesentlich ist, dass die Standard - Prothesenzähne insbesondere auch an ihrer basalen Seite bearbeitet und angepasst werden.

### Aufgabe der Erfindung

Die Aufgabe der Erfindung ist es, die Nachteile die der Stand des Technik mit sich bringt zu überwinden. Insbesondere soll ein Verfahren bereitgestellt werden, mit welchem die Herstellung einer Zahnprothese verbessert und weitestgehend automatisiert werden soll, so dass eine möglichst einfache, vollständige und insbesondere kostengünstige Herstellung der Zahnprothese aus einer Prothesenbasis und aus Standard-Prothesenzähne möglich wird.

### Lösung der Aufgabe

Zur Lösung der Aufgabe führen die Merkmale nach den unabhängigen Ansprüchen 1 und 2. Vorteilhafte Ausgestaltungen sind in den Unteransprüchen beschrieben.

Ablauf des erfindungsgemäßen Verfahrens:
Zunächst werden die Daten zu einer Mundhöhle eines Patienten, welchem eine Zahnprothese angefertigt und angepasst werden soll, aufgenommen und digital gespeichert. Dies kann auf vollständig digitalem, oder auf teilweise digitalem Wegen geschehen.

Bei dem vollständig digitalem Weg wird die Mundraumsituation eines Patienten mit Hilfe einer entsprechenden Scanner-Sonde und eines entsprechenden Rechners und Programms digital ausgemessen, erfasst und gespeichert.

Bei dem teilweise digitalen Weg, wird zunächst durch ein analoges Verfahren ein klassischer Abdruck der Mundhöhle bzw. der entsprechenden Stelle im Mundraum genommen. Mit Hilfe dieses Abdrucks wird dann in einem zweiten Schritt ein Gipsmodell der Patientensituation gefertigt. Auf Grundlage dieses Gipsmodells wird mittels geeignetem Scanner ein digitaler Abdruck der Mundhöhlensituation erstellt und gespeichert. Das heisst, dass in diesem Fall, die Daten einer Mundhöhle über den Umweg eines analogen Abdrucks erhoben und gespeichert werden. Dies kann in einigen Fällen Vorteile, insbesondere in Hinsicht auf spezifische Mundhöhlensituationen mit sich bringen. Dadurch ist es auch möglich das folgend beschriebene Verfahren Anzuwenden, auch wenn bei einem Zahnarzt die notwendigen Geräte für einen Mundhöhlenscan nicht vorhanden sind, oder aus einem anderen Grund nicht zum Einsatz kommen können.

Auf der Grundlage der digital erfassten Daten einer Mundhöhle wird mittels eines rechnerbasierten Computerprogramms eine digitale Zahnprothese entworfen. Dabei handelt es sich um eine CAD-Technologie (CAD - Computer Aided Design, Deutsch: rechnerunterstützte Konstruktion). Dabei werden die am besten geeigneten Standard-Prothesenzähne automatisch ausgesucht und digital in einer ebenfalls auf den aufgenommenen Daten der Mundhöhle digital konstruierten Prothesenbasis angeordnet. Dabei ist das Programm durch zusätzlich eingegebene Daten des Patienten auch in der Lage entsprechend passende Zahnfärbungen bei der Auswahl automatisch oder durch einen Anwender zu berücksichtigen.

Weiterhin wird in Verbindung mit einer der digital erstellten Prothesenbasis und den Daten der Mundhöhlensituation, individuell berechnet, wie die einzelnen ausgewählten Standard-Prothesenzähne bearbeitet werden müssen, um die möglichst beste angepasste Zahnprothese herzustellen. Dabei ist insbesondere die Anpassung der Zahnlänge von der basalen Seite ausgehend wesentlich.

Ein Werkstück, welches erfindungsgemäß entweder ein Kunststoff-Werkstück oder ein Wachs-Werkstück ist, wird einer Bearbeitungseinrichtung zugeführt. Das Werkstück wird in Fachkreisen auch als Blank bezeichnet.

Eine Bearbeitungseinrichtung ist dabei eine Vorrichtung die dazu geeignet ist, Material vom Werkstück abzutragen oder auf eine andere Art zu entfernen. Dies können beispielsweise CAM basierte Frässysteme oder laserbasierte SLM Systeme (Selective Laser Melting) sein.

Weiterhin ist die Bearbeitungseinrichtung mit einem Rechner verbunden. Dabei handelt es sich um eine CAM-Technologie (CAM - Computer-Aided Manufacturing, Deutsch: rechner-unterstützte Fertigung), wodurch die Bearbeitungseinrichtung auf Grundlage der zuvor im CAD- Verfahren digital erstellten und gespeicherten Zahnprothese gesteuert wird.

Die Daten der jeweiligen Ausformung der einzelnen zur Verfügung stehenden Standard-Prothesenzähne sind im Rechner hinterlegt.

Auf Grundlage dieser hinterlegten Daten wird auf der ersten Bearbeitungsseite des Werkstücks ein oder mehrere Kauflächen-Abdrücke durch die Bearbeitungseinrichtung eingeformt. Diese auf der ersten Bearbeitungsseite des Werkstücks eingearbeiteten Kauflächen-Abdrücke entsprechen gespiegelt der Ausformung der Kaufläche der jeweils ausgewählten Standard-Prothesenzähne.

Sind die Kauflächen-Abdrücke in die erste Bearbeitungsseite des Werkstücks eingeformt, werden die für die Zahnprothese vorgesehenen Standard-Prothesenzähne passgenau mit ihrer Kauflächenseite in die Kauflächen-Abdrücke eingesetzt.

Die auf der ersten Bearbeitungsseite das Werkstück eingearbeiteten Kauflächen-Abdrücke weisen eine jeweilige Tiefe auf, die gewährleistet, dass der überwiegende Teil der dort eingesetzten Standard-Prothesenzähne mit seiner basalen Seite aus dem Werkstück herausragen. Dabei greift der jeweils eingesetzte Standard-Prothesenzahn maximal bis zu einem Drittel seiner Gesamtlänge in das Werkstück bzw. den Kauflächen-Abdruck ein.

Damit die in die Kauflächen-Abdrücke eingesetzten Standard-Prothesenzähne dort für die Bearbeitung durch die Bearbeitungsvorrichtung reversibel und dennoch für die Bearbeitung ausreichend belastbar gehalten werden, kann in einem Ausführungsbeispiel zusätzlich zwischen die Kauflächen-Abdrücke des Werkstücks und die Kaufläche des Standard-Prothesenzahns ein spezielles Adhäsionsmittel gebracht werden. Dabei kommen Adhäsionsmittel zum Einsatz die im medizinischen Bereich bereits Verwendung finden und auf die unterschiedlichen Materialien der Werkstücke, wie zum Beispiel Wachs oder Kunststoff, abgestimmt sind.

Dabei ist eine wesentliche Eigenschaft dieser zu verwendenden Adhäsionsmittel, dass nach der Bearbeitung des Standard-Prothesenzahns an seiner basalen Seite dieses wieder auf einfache Weise von der Kaufläche des Standard- Prothesenzahns entfernt werden kann. Bevorzugt kommen Adhäsionsmittel zum Einsatz, die wasserlöslich sind oder zumindest anschliessend durch einfache manuelle Reinigung entfernt werden können.

Die mittels des Adhäsionsmittels über ihre Kauflächenseite mit dem Werkstück bzw. dem individuellen Kauflächen-Abdruck verbundenen Standard-Prothesenzähne werden nun durch die Bearbeitungseinrichtung bearbeitet.

Dabei wird der Standard-Prothesenzahn an seiner basalen Seite in seiner Höhe, Breite und dadurch in seiner Form beispielsweise mittels des CAM-Verfahrens bearbeitet. Diese Bearbeitung geschieht automatisch und basiert auf den Daten, der im CAD-Verfahren erstellten Zahnprothese. Dabei wird ständig ein Ist-/Soll-Abgleich zwischen dem zu bearbeitenden Standard-Prothesenzahn und den digitalen Daten durch das Programm und die Bearbeitungseinrichtung vorgenommen.

Die Form des fertig bearbeiteten Standard- Prothesenzahns, die der digital berechneten Form entspricht, wird in Form von Basal-Bearbeitungsdaten vom Rechner erfasst und abgespeichert.

Bei der automatischen Bearbeitung der basalen Seite des Standard-Prothesenzahns können, je nach Notwendigkeit und Ausführung des Standard-Prothesenzahns auch umlaufende oder anders gestaltete Halterillen eigearbeitet werden. Die Halterillen dienen zur Aufnahme des zu verwendenden Adhäsionsmittels und bieten zusätzliche Ansatzfläche. Die Halterillen sind derart angeordnet und ausgeformt, dass sie beim Einsetzen des Standard-Prothesenzahns in die Prothesenbasis in den entsprechenden Alveolen verschwinden und nicht sichtbar sind. Sie können in Ausformung, Anordnung und Tiefe variieren. Diese Variation ist an die jeweiligen Ausformungen der unterschiedlichen Standard-Prothesenzähne angepasst und richtet sich auch nach den Gegebenheiten der individuell erstellten Prothesenbasis.

Danach werden die bearbeiteten Standard-Prothesenzähne wieder aus dem Kauflächen-Abdruck entnommen und damit von dem Werkstück getrennt. Dazu genügt manuell ausgeübte Zugkraft.

Das zur vorübergehenden Befestigung genutzte Adhäsionsmittel kann dann auf einfache Weise mit Hilfe eine Bürste oder durch die Verwendung eines zu diesem Zweck brauchbaren Lösungsmittels, wie beispielsweise warmen Wassers, entfernt werden. Denkbar ist auch, dass das zu entfernende Adhäsionsmittel mittels Wasserdampf oder auf eine andere Weise abgelöst wird.

Auf Grundlage der digitalen gespeicherten Daten der Mundhöhle und der digital erstellten Zahnprothese wird von der Bearbeitungseinrichtung durch entsprechende rechnerbasierte Befehle, auf der zweiten Bearbeitungsseite des Werkstücks eine Prothesenbasis hergestellt. Dazu ist vorgesehen, dass die Bearbeitungseinrichtung eine auf das Werkstück bezogene Bearbeitungstiefe von 0 bis 50mm, bevorzugt 0 bis 40 mm oder noch bevorzugter 0 bis 30mm aufweist.

Bei der Ausarbeitung bzw. Herstellung der Prothesenbasis werden gleichzeitig oder nacheinander sogenannte Alveolen in die Prothesenbasis eingebracht. Die Alveolen sind Ausnehmungen in die die bearbeiteten Standard-Prothesenzähne mit ihrer basalen Seite eingesetzt werden. Besonders an diesen Alveolen ist, dass sie von der rechnergesteuerten Bearbeitungseinrichtung in einer derartigen Ausformung in die Prothesenbasis eingebracht werden, die gespiegelt der bearbeiten basalen Seite des an dieser Position zu platzierenden Standard- Prothesenzahns entspricht. Dadurch wird ein passgenauer Sitz des Standard- Prothesenzahns erreicht. Spätere manuelle Anpassungen an der Zahnprothese sind daher nicht mehr notwendig.

Wird in der Bearbeitungseinrichtung ein Kunststoff-Werkstück bearbeitet, dann wird in die nach dem o.g. Verfahren hergestellte Prothesenbasis die Standard-Prothesenzähne in die passgenauen Alveolen mit einem weiteren speziellen Adhäsionsmittel eingesetzt, so dass eine dauerhafte und tragkräftige Verbindung zwischen den Standard- Prothesenzähnen und der Prothesenbasis aus Kunststoff geschaffen wird.

Danach sind nur kleinere Korrekturen an der entstandenen Zahnprothese durch einen Zahntechniker vorzunehmen.

Der verwendete Kunststoff des Werkstücks kann dabei entweder bereits eine Färbung aufweisen, die der Farbe des Zahnfleisches entspricht, oder nachträglich gefärbt und/oder entsprechend oberflächenbehandelt werden.

Wird in der Bearbeitungseinrichtung ein Wachs-Werkstück bearbeitet, entsteht nach dem o.g. Verfahren zunächst eine Prothesenbasis aus Wachs, in die die Standard- Prothesenzähne mit einem ebenfalls speziellen Adhäsionsmittel eingesetzt werden. Diese so entstandene Wachsprothese wird beim Zahnarzt, von dem Patienten getestet, um ggf. die Stellungen der künstlichen Prothesenzähne noch einmal korrigieren zu können. Diese korrigierte Aufstellung wird dann zurück an das Zahnlabor gegeben.

Im Labor wird dann die angepasste Wachsprothese mittels Scanner erneut digital erfasst. Die so erfassten Daten der angepassten Wachsprothese bzw. der Wachprothesenbasis werden mit dem CAM- bzw. dem CAD- Verfahren verarbeitet so dass in der Bearbeitungseinrichtung eine Prothesenbasis aus Kunststoff hergestellt wird.

Weiterhin ist im Labor natürlich auch die Anwendung des manuellen herkömmlichen Verfahrens möglich. Dabei werden die bearbeiteten Standard-Prothesenzähne in eine finale Prothesenbasis aus Kunststoff überführt. Dazu wird in der Regel eine Hohlform oder Gießform zum Beispiel aus Gips auf Grundlage der angepassten Wachsprothese aufgebaut, in der die Prothesenzähne bereits integriert werden. Dadurch sind die Standard - Prothesenzähne bereits in die Hohlform eingesetzt, wenn in die Form ein zahnfleischfarbener Kunststoff eingegossen wird. Dadurch werden die Prothesenzähne automatisch und ohne weiteres Adhäsionsmittel mit der Prothesenbasis verbunden. Danach sind nur noch kleinere Nacharbeitungen an der Zahnprothese durch den Zahntechniker notwendig.

Bei der Bearbeitung des Werkstücks in der Bearbeitungseinrichtung können ferner vorgenannte Verfahren auch - zwar nicht erfindungsgemäß - derart ablaufen, dass sowohl auf der ersten Bearbeitungsseite als auch auf der zweiten Bearbeitungsseite eines weiteren Werkstücks Kauflächenabdrücke nach den jeweils ausgewählten Standard-Prothesenzähne eingebracht werden. Die dort eingesetzten und bearbeiteten Standard-Prothesenzähne werden dann in eine entsprechend hergestellte Prothesenbasis eingesetzt die aus einem anderen Werkstück hergestellt wurde.

Weiterhin ist auch denkbar, dass auf Grundlage der gescannten und gespeicherten Daten der angepassten Wachsprothese bzw. Wachsprothesenbasis eine Prothesenbasis aus Kunststoff mittels eines 3D-Druckers hergestellt wird, in die dann die bearbeiteten Standard-Zahnprothesen eingesetzt werden.

### Figurenbeschreibung

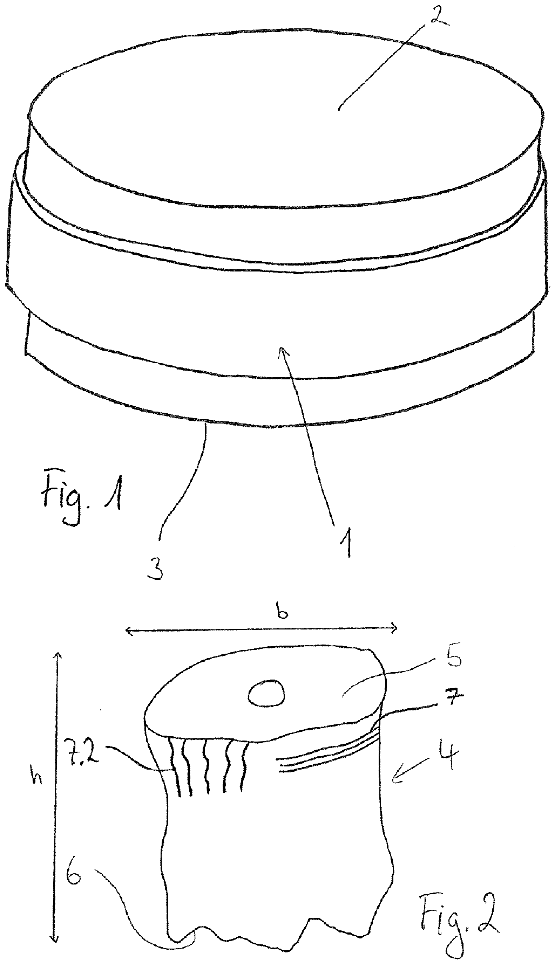

Weitere Vorteile, Merkmale und Einzelheiten der Erfindung ergeben sich aus der nachfolgenden Beschreibung sowie anhand der Zeichnungen; diese zeigen inFigur 1 ein beispielhafte schematische Darstellung eines Werkstück 1, 1.2, 1.3 mit Blick auf eine erste Bearbeitungsseite 2 Figur 2 einen beispielhafte schematisch Darstellung eines Standardprothesenzahns 4 aus einem seitlichen Blickwinkel auf eine Basalseite 5

Figur 1 zeigt eine exemplarische und schematische Abbildung eines Werkstücks 1, welches als ein Kunststoff-Werkstück oder ein Wachs-Werkstück ausgeführt sein kann.

Das Kunststoff-Werkstück besteht aus einem Kunststoff oder einer Kunststoffmischung.

Das Wachs-Werkstück besteht aus einem Wachs oder einer geeigneten Wachsmischung.

Das Werkstück 1 ist im gezeigten Ausführungsbeispiel scheibenförmig ausgeformt und weist eine erste Bearbeitungsseite 2 und eine gegenüberliegende zweite Bearbeitungsseite 3 auf.

Die Dicke, das heißt der Abstand zwischen der ersten Bearbeitungsseite 2 und der zweiten Bearbeitungsseite 3, des Werkstücks 1 kann unterschiedliche Ausprägungen haben. Diese Ausprägungen liegen aber vorzugsweise zwischen 15 mm und 80 mm. Das Werkstück 1 ist weiterhin derart ausgeformt, dass sie in geeignete Bearbeitungseinrichtungen zur Bearbeitung aufgenommen werden kann. Dazu ist sie im Ausführungsbeispiel rund ausgeführt.

Figur 2 zeigt einen Standard-Prothesenzahn 4. Dieser Standard - Prothesenzahn 4 weist eine Basalseite 5 und eine gegenüberliegende Kaufläche 6 auf. Der abgebildete Standard - Prothesenzahn 4 steht beispielhaft für die große Vielfalt an unterschiedlichen Standard-Prothesenzähnen die in vorliegender Erfindung von einem rechnerbasierten Programm passend für die jeweilige Prothesensituation eines jeden Patienten vorgeschlagen bzw. ausgesucht werden.

Weiterhin sind beispielhaft horizontal angeordnete Halterillen 7 sowie vertikal angeordnete Halterillen 7.2 dargestellt. Horizontal bedeutet im Wesentlichen parallel zur Basalseite 5. Vertikal bedeutet im Wesentlichen angewinkelt zur Horizontalen. Dies Halterillen 7, 7.2 werden von der Bearbeitungseinrichtung auf der Basalseite 5 des Standard-Prothesenzahns 4 angeordnet. Die jeweilige Ausrichtung und Form und Tiefe richtet sich nach dem jeweiligen Standard-Prothesenzahn 4 und der entworfenen Prothesenbasis.

**Bezugszeichenliste**

| | | | | | |
|---|---|---|---|---|---|
| 1 | Werkstück | 34 | | | |
| | | 35 | | | |
| | | 36 | | | |
| 2 | erste Bearbeitungsseite | 37 | | | |
| 3 | zweite Bearbeitungsseite | 38 | | | |
| 4 | Standard-Prothesenzahn | 39 | | | |
| | | 40 | | | |
| 5 | Basalseite | 41 | | | |
| 6 | Kaufläche | 42 | | | |
| 7 | horizontale Halterillen | 43 | | | |
| 7.2 | vertikale Halterillen | 44 | | | |
| 12 | | 45 | | | |
| 13 | | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung einer Zahnprothese bestehend aus einer Kunststoff-Prothesenbasis und eines vorkonfektionierten Standard-Prothesenzahns (4) in einer abtragenden Bearbeitungseinrichtung, wobei digital erfassten Daten einer Mundhöhle in einen mit der Bearbeitungseinrichtung verbundenen Rechner eingespeichert werden, wobei auf Grundlage der digital erfassten Daten der Mundhöhle mittels eines CAD-Verfahrens die Zahnprothese digital erstellt und gespeichert wird, wobei die Bearbeitungseinrichtung auf die Grundlage der digital erstellten und gespeicherten Zahnprothese gesteuert wird, mit den folgenden Schritten:
a. Bereitstellen eines Kunststoff-Werkstücks mit einer ersten Bearbeitungsseite (2) und einer zweiten Bearbeitungsseite (3);
b. Auswahl eines digital erfassten vorkonfektionierten Standard-Prothesenzahns (4) durch Abgleich mit den digital erfassten Daten der Mundhöhle;
c. In die erste Bearbeitungsseite (2) des Kunststoff-Werkstücks wird ein Kauflächen-Abdruck anhand des ausgewählten vorkonfektionierten Standard-Prothesenzahns (4) passgenau eingearbeitet und der vorkonfektionierte Standard-Prothesenzahn (4) eingesetzt, sodass eine Basalseite (5) des vorkonfektionierten Standard-Prothesenzahns (4) aus dem Kunststoff-Werkstück herausragt;
d. die Basalseite (5) des vorkonfektionierten Standard-Prothesenzahns (4) wird durch die Bearbeitungseinrichtung in einer Höhe (h), einer Breite (b) und einer Form bearbeitet, wobei ständig ein Ist-/Soll-Abgleich zwischen dem zu bearbeitenden vorkonfektionierten Standard-Prothesenzahn und den digital erfassten Daten der im CAD-Verfahren erstellten Zahnprothese vorgenommen wird;
e. die Höhe (h), die Breite (b) und die Form der bearbeiteten Basalseite (5) des vorkonfektionierten Standard-Prothesenzahns (4) werden im Rechner als Basal-Bearbeitungsdaten abgespeichert;
f. die zweite Bearbeitungsseite (3) des Kunststoff-Werkstücks wird anhand der Daten der Mundhöhle und der digital erfassten Daten der im CAD-Verfahren erstellten Zahnprothese zu der Prothesenbasis bearbeitet, wobei eine Alveole anhand der Basal-Bearbeitungsdaten erstellt wird;
g. der bearbeite vorkonfektionierte Standard-Prothesenzahn (4) wird in die Alveole eingesetzt und befestigt.

2. Verfahren zur Herstellung einer Zahnprothese bestehend aus einer Wachs-Prothesenbasis und eines vorkonfektionierten Standard-Prothesenzahns (4) in einer abtragenden Bearbeitungseinrichtung, wobei digital erfassten Daten einer Mundhöhle in einen mit der Bearbeitungseinrichtung verbundenen Rechner eingespeichert werden, wobei auf Grundlage der digital erfassten Daten der Mundhöhle mittels eines CAD-Verfahrens die Zahnprothese digital erstellt und gespeichert wird, wobei die Bearbeitungseinrichtung auf die Grundlage der digital erstellten und gespeicherten Zahnprothese gesteuert wird, mit den folgenden Schritten:
a. Bereitstellen eines Wachs-Werkstücks mit einer ersten Bearbeitungsseite (2) und einer zweiten Bearbeitungsseite (3);
b. Auswahl eines digital erfassten vorkonfektionierten Standard-Prothesenzahns (4) durch Abgleich mit den digital erfassten Daten der Mundhöhle;
c. In die erste Bearbeitungsseite (2) des Wachs-Werkstücks wird ein Kauflächen-Abdruck anhand des ausgewählten vorkonfektionierten Standard-Prothesenzahns (4) passgenau eingearbeitet und der vorkonfektionierte Standard-Prothesenzahn (4) eingesetzt, sodass eine Basalseite (5) des vorkonfektionierten Standard-Prothesenzahns (4) aus dem Wachs-Werkstück herausragt;
d. die Basalseite (5) des vorkonfektionierten Standard-Prothesenzahns (4) wird durch die Bearbeitungseinrichtung in einer Höhe (h), einer Breite (b) und einer Form bearbeitet, wobei ständig ein Ist-/Soll-Abgleich zwischen dem zu bearbeitenden vorkonfektionierten Standard-Prothesenzahn und den digital erfassten Daten der im CAD-Verfahren erstellten Zahnprothese vorgenommen wird;
e. die Höhe (h), die Breite (b) und die Form der bearbeiteten Basalseite (5) des vorkonfektionierten Standard-Prothesenzahns (4) werden im Rechner als Basal-Bearbeitungsdaten abgespeichert;
f. die zweite Bearbeitungsseite (3) des Wachs-Werkstücks wird anhand der Daten der Mundhöhle und der digital erfassten Daten der im CAD-Verfahren erstellten Zahnprothese zu der Wachs-Prothesenbasis bearbeitet, wobei eine Alveole anhand der Basal-Bearbeitungsdaten erstellt wird;
g. der bearbeite vorkonfektionierte Standard-Prothesenzahn (4) wird in die Alveole der Wachs-Prothesenbasis eingesetzt und befestigt.

3. Verfahren nach Anspruch 2, **dadurch gekennzeichnet, dass** eine Kunststoff-Prothesenbasis aus dem Positiv der Wachs- Prothesenbasis erstellt wird.

4. Verfahren nach einem der Ansprüche 1 bis 3, **dadurch gekennzeichnet, dass** vor dem Einsetzen einer Kaufläche (6) des vorkonfektionierten Standard-Prothesenzahns (4) in den Kauflächen-Abdruck ein Adhäsionsmittel zwischen den Kauflächen-Abdruck und die Kaufläche (6) gebracht wird.

## Claims

1. Method for producing a dental prosthesis comprising a plastic prosthesis base and a prefabricated standard prosthetic tooth (4) in an ablative machining device, digitally recorded data of an oral cavity being stored in a computer connected to the machining device, the dental prosthesis being digitally created and stored on the basis of the digitally recorded data of the oral cavity by means of a CAD method, the machining device being controlled on the basis of the digitally created and stored dental prosthesis,
with the following steps:
a. providing a plastic workpiece having a first machining side (2) and a second machining side (3);
b. selection of a digitally acquired pre-assembled standard prosthetic tooth (4) by comparison with the digitally acquired data of the oral cavity;
c. a chewing surface impression is accurately worked into the first machining side (2) of the plastic workpiece using the selected prefabricated standard prosthetic tooth (4) and the prefabricated standard prosthetic tooth (4) is inserted so that a basal side (5) of the prefabricated standard prosthetic tooth (4) protrudes from the plastic workpiece;
d. the basal side (5) of the prefabricated standard prosthetic tooth (4) is machined by the machining device at a height (h), a width (b) and a shape, an actual/target comparison constantly being made between the prefabricated standard prosthetic tooth to be machined and the digitally recorded data of the prosthetic tooth produced in the CAD method;
e. the height (h), the width (b) and the shape of the machined basal side (5) of the prefabricated standard prosthetic tooth (4) are stored in the computer as basal machining data;
f. the second machining side (3) of the plastic workpiece is processed on the basis of the data of the oral cavity and the digitally recorded data of the dental prosthesis produced in the CAD method for the prosthesis base, an alveolus being produced on the basis of the basal machining data;
g. the machined pre-fabricated standard prosthetic tooth (4) is inserted into the alveolus and fixed.

2. Method for manufacturing a dental prosthesis consisting of a wax prosthesis base and a prefabricated standard prosthetic tooth (4) in an ablative machining device, digitally acquired data of an oral cavity being stored in a computer connected to the machining device, the dental prosthesis being digitally created and stored on the basis of the digitally acquired data of the oral cavity by means of a CAD method, the machining device being controlled on the basis of the digitally created and stored dental prosthesis,
with by the following steps:
a. providing a wax workpiece having a first machining side (2) and a second machining side (3);
b. selection of a digitally acquired prefabricated standard prosthetic tooth (4) by comparison with the digitally acquired data of the oral cavity;
c. a chewing surface impression is accurately worked into the first machining side (2) of the wax workpiece using the selected prefabricated standard prosthetic tooth (4) and the prefabricated standard prosthetic tooth (4) is inserted so that a basal side (5) of the prefabricated standard prosthetic tooth (4) protrudes from the wax workpiece;
d. the basal side (5) of the prefabricated standard prosthetic tooth (4) is machined by the machining device at a height (h), a width (b) and a shape, an actual/target comparison constantly being made between the prefabricated standard prosthetic tooth to be machined and the digitally recorded data of the dental prosthesis fabricated in the CAD method;
e. the height (h), width (b) and shape of the machined basal side (5) of the prefabricated standard prosthetic tooth (4) are stored in the computer as basal machining data;
f. the second machining side (3) of the wax work piece is processed on the basis of the data of the oral cavity and the digitally recorded data of the dental prosthesis produced in the CAD method to form the wax prosthesis base, an alveolus being produced on the basis of the basal machining data;
g. the machined pre-assembled standard prosthetic tooth (4) is inserted into the alveolus of the wax prosthesis base and secured.

3. Method according to claim 2, **characterized in that** a plastic prosthesis base is fabricated from the positive of the wax prosthesis base.

4. Method according to one of claims 1 to 3, **characterized in that** before the insertion of a chewing surface (6) of the prefabricated standard prosthetic tooth (4) into the chewing surface impression, an adhesive is brought between the chewing surface impression and the chewing surface (6).

## Revendications

1. Procédé de fabrication d'une prothèse dentaire composée d'une base de prothèse en plastique et d'une prothèse dentaire standard pré-confectionnée (4) dans un dispositif d'usinage par ablation, dans lequel les données acquises numériquement d'une cavité buccale sont mémorisées dans un ordinateur connecté au dispositif d'usinage, dans lequel la prothèse dentaire est réalisée numériquement et mémorisée sur base des données acquises numériquement de la cavité buccale à l'aide d'un procédé de CAD, dans lequel le dispositif d'usinage est commandé sur base de la prothèse dentaire réalisée numériquement et mémorisée,
aux étapes suivantes consistant à:
a. prévoir une pièce à usiner en matière plastique avec une première face d'usinage (2) et une deuxième face d'usinage (3);
b. sélectionner une prothèse dentaire standard pré-confectionnée acquise numériquement (4) par comparaison avec les données acquises numériquement de la cavité buccale;
c. dans la première face d'usinage (2) de la pièce à usiner en matière plastique est incorporée de manière ajustée une empreinte de face de mastication à l'aide de la prothèse dentaire standard pré-confectionnée sélectionnée (4) et est placée la prothèse dentaire standard pré-confectionnée (4) de sorte qu'une face basale (5) de la prothèse dentaire standard pré-confectionnée (4) ressorte de la pièce à usiner en matière plastique;
d. la face basale (5) de la prothèse dentaire standard pré-confectionnée (4) est usinée par le dispositif d'usinage en hauteur (h), en largeur (b) et en forme, où il est constamment procédé à une comparaison de consigne/cible entre la prothèse dentaire standard pré-confectionnée à usiner et les données acquises numériquement de la prothèse dentaire réalisée selon le procédé CAD;
e. la hauteur (h), la largeur (b) et la forme de la face basale usinée (5) de la prothèse dentaire standard pré-confectionnée (4) sont mémorisées dans l'ordinateur comme données d'usinage basal;
f. la deuxième face d'usinage (3) de la pièce à usiner en plastique est usinée, l'aide des données de la cavité buccale et des données acquises numériquement de la prothèse dentaire réalisée par le procédé CAD, pour obtenir la base de la prothèse, une alvéole étant réalisée à l'aide des données d'usinage basal;
g. la prothèse dentaire standard pré-confectionnée usinée (4) est introduite et fixée dans l'alvéole.

2. Procédé de fabrication d'une prothèse dentaire composée d'une base de prothèse en cire et une prothèse dentaire standard pré-confectionnée (4) dans un dispositif d'usinage par ablation, dans lequel la prothèse dentaire est réalisée numériquement et mémorisée sur base des données acquises numériquement de la cavité buccale à l'aide d'un procédé de CAD, dans lequel le dispositif d'usinage est commandé sur base de la prothèse dentaire réalisée numériquement et mémorisée,
aux étapes suivantes consistant à:
a. prévoir une pièce à usiner en cire avec une première face d'usinage (2) et une deuxième face d'usinage (3);
b. sélectionner une prothèse dentaire standard pré-confectionnée acquise numériquement (4) par comparaison avec les données acquise numériquement de la cavité buccale;
c. dans la première face d'usinage (2) de la pièce à usiner en cire est incorporée de manière ajustée une empreinte de face de mastication à l'aide de la prothèse dentaire standard pré-confectionnée sélectionnée (4) et est placée la prothèse dentaire standard pré-confectionnée (4) de sorte qu'une face basale (5) de la prothèse dentaire standard pré-confectionnée (4) ressorte de la pièce à usiner en cire;
d. la face basale (5) de la prothèse dentaire standard pré-confectionnée (4) est usinée par le dispositif d'usinage en hauteur (h), en largeur (b) et en forme, où il est constamment procédé à une comparaison de consigne/cible entre la prothèse dentaire standard pré-confectionnée à usiner et les données acquises numériquement de la prothèse dentaire réalisée selon le procédé CAD;
e. la hauteur (h), la largeur (b) et la forme de la face basale usinée (5) de la prothèse dentaire standard pré-confectionnée (4) sont mémorisées dans l'ordinateur comme données d'usinage basal;
f. la deuxième face d'usinage (3) de la pièce à usiner en cire est usinée, l'aide des données de la cavité buccale et des données acquises numériquement de la prothèse dentaire réalisée par le procédé CAD, pour obtenir la base de la prothèse en cire, une alvéole étant réalisée à l'aide des données d'usinage basal;
g. la prothèse dentaire standard pré-confectionnée usinée (4) est introduite et fixée dans l'alvéole de la base de la prothèse en cire.

3. Procédé selon la revendication 2, **caractérisé par le fait qu'**une base de prothèse en plastique est réalisée à partir du positif de la base de prothèse en cire.

4. Procédé selon l'une des revendications 1 à 3, **caractérisé par le fait que**, avant l'introduction d'une face de mastication (6) de la prothèse dentaire standard pré-confectionnée (4) dans l'empreinte de face de mastication, un adhésif est placé entre l'empreinte de face de mastication et la face de mastication (6).
